(19)

Europäisches
Patentamt
European
Patent Office
Office européen
des brevets

(11) **EP 4 450 186 A1**

(12) **EUROPEAN PATENT APPLICATION**

(43) Date of publication:
**23.10.2024  Bulletin 2024/43**

(21) Application number: **23168701.3**

(22) Date of filing: **19.04.2023**

(51) International Patent Classification (IPC):
*B22F 1/052* (2022.01)      *B22F 10/14* (2021.01)
*B22F 10/28* (2021.01)      *B33Y 10/00* (2015.01)
*B33Y 70/00* (2020.01)      *C22C 38/02* (2006.01)
*C22C 38/04* (2006.01)      *C22C 38/08* (2006.01)
*C22C 38/12* (2006.01)      *B22F 3/105* (2006.01)
*B22F 3/15* (2006.01)       *B22F 3/22* (2006.01)
*C22C 33/02* (2006.01)

(52) Cooperative Patent Classification (CPC):
**B22F 1/052; B22F 10/14; B22F 10/28; B33Y 10/00;
B33Y 70/00; C22C 38/02; C22C 38/04;
C22C 38/08; C22C 38/12;** B22F 3/105; B22F 3/15;
B22F 3/225; C22C 33/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sandvik Machining Solutions AB
811 81 Sandviken (SE)**

(72) Inventors:
• **DEIRMINA, Faraz
811 81 SANDVIKEN (SE)**
• **BETTINI, Eleonora
811 81 SANDVIKEN (SE)**

(74) Representative: **Sandvik
Sandvik Intellectual Property AB
811 81 Sandviken (SE)**

(54) **MANAGING STEEL POWDER FREE FROM CO, TI, AND AL**

(57)      The present invention relates to a Fe-based powder for additive manufacturing comprising the following elements in wt% based on the weight of all elements of the powder:
i) Ni in an amount ranging from 9.0 to 14.0
ii) Mo in an amount ranging from 7.0 to 9.0
iii) C in an amount ranging from 0.03 to 0.08
iv) Si in an amount up to 0.3
v) Mn in an amount up to 0.3
the balance being Fe and usual impurities. The invention also relates to the use of the Fe-based powder and a process of producing an object therefrom.

Fig. 1

EP 4 450 186 A1

**Description**

The present invention relates to a Fe-based powder for additive manufacturing, the use of the Fe-based powder, and a process for producing an object therefrom.

Background of the invention

Additive manufacturing (AM), or three-dimensional (3D) printing, is a promising manufacturing technique that makes it possible to produce complex shapes and bodies that cannot be easily obtained by conventional manufacturing processes. In many additive manufacturing techniques, in particular laser powder bed fusion (L-PBF), a powder is subjected to rapid melting followed by rapid solidification (at a cooling rate of $10^4$-$10^6$ K/s). There is a constant need in industry for finding new materials for additive manufacturing.

Maraging steels form part of a class of ultra-high strength martensitic steels which can be welded without preheating, either in annealed or heat-treated condition. AM maraging steels are therefore employed as tool steels in the mould and die making industry, as well as for high-performance parts, e.g. in the aerospace industry.

Maraging steels are characterized by a low carbon content favouring dimensional stability, and the presence of substitutional alloying elements such as Mo, Ti, and Al which trigger age-hardening in Fe-Ni martensite by precipitation of nano-sized intermetallic particles (e.g. NisTi, NisMo, NiAl, and $Fe_7Mo_6$). The martensitic microstructure of maraging steels is achieved through a high nickel content compared to most tool steels which instead are achieving their martensitic microstructure through a relatively high amount of carbon (up to 1.5 wt.%) in the alloy composition.

In Co-containing maraging steels, Co increases the supersaturation of Mo in the matrix leading to enhanced precipitation kinetics. Co also reduces the stacking fault energy which retards dislocation movement in the matrix and increases the interaction energy between dislocations and interstitial atoms to reduce the brittleness at high strength levels. Co also raises the martensite start (Ms) temperature enabling addition of higher amounts of substitutional alloying elements (e.g. Mo and Ti) without running the risk of stabilizing residual austenite.

Among conventional maraging steel grades, 18Ni300 steel with a nominal composition of 18.0 Ni-10.0 Co-5.0 Mo-0.7 Ti and Fe balance (wt%) and an achievable tensile strength (UTS) of ~2000 MPa is reported to be the most exploited commercial powder for additive manufacturing (AM), in particular for the laser powder bed fusion (L-PBF) process.

From a metallurgical viewpoint, developing an ultra-high strength low carbon maraging steel with acceptable toughness without using Co would be challenging. In addition to its impact on the Ms temperature and indirect strengthening, Co also enhances toughness at high strength levels. It has been reported that in Co free maraging steels strengthened by increased amounts of Ti or Al to compensate for the absence of Co-Mo interactions, the toughness drops even more sharply at high strength levels. Increased amounts of Ti may also deteriorate the toughness due to formation of grain boundary titanium carbonitrides. In addition, Ti and Al can deteriorate the polish-ability of the steel because of oxide inclusion formation.

One of the challenges when producing martensitic steel objects using AM is to provide a body with comparable microstructure in view of porosity, a minimum of retained austenite etc. as conventionally produced steels in austenitized and quenched condition or in solution annealed condition.

There have been many attempts to find a suitable powder that is both easy to manufacture, has appropriate characteristics for AM and results in a final product with required properties and quality.

An object of the invention is to provide a powder free from Co, Al, and Ti imparting good hardness, ultimate tensile strength, yield strength and acceptable ductility properties as well as improved polish-ability to an object manufactured therefrom.

A further object is to provide a powder with improved sinter-ability, i.e. a powder composition imparting a higher density to the sintered object.

A further object of the invention is to reduce the amount of metal oxides remaining in the manufactured object obtained from the powder to reduce the negative impact on the polish-ability of an object manufactured thereof.

The invention

The present invention relates to a Fe-based powder for additive manufacturing comprising the following elements in wt% based on the weight of all elements of the powder:

　　i) Ni in an amount ranging from 9.0 to 14.0
　　ii) Mo in an amount ranging from 7.0 to 9.0
　　iii) C in an amount ranging from 0.03 to 0.08
　　iv) Si in an amount up to 0.3

v) Mn in an amount up to 0.3

the balance being Fe and usual impurities.

The wording "Fe-based powder for additive manufacturing" as used herein refers to a ready-to-print Fe-based powder for use in inter alia additive manufacturing processes.

According to one embodiment, Ni is comprised in an amount ranging from 10.0 to 14.0.

According to one embodiment, Mo is comprised in an amount ranging from 7.5 to 8.5.

According to one embodiment, C is comprised in an amount ranging from 0.035 to 0.07.

According to one embodiment, C is comprised in an amount ranging from 0.04 to 0.07.

According to one embodiment, the Fe-based powder comprises the following elements in amounts, if present

Si up to 0.2 or up to 0.1 or up to 0.01
Mn up to 0.2 or up to 0.1 or up to 0.01

According to one embodiment, the Fe-based powder is free from or comprises impurities of the elements below in amounts in wt%, if present,

Al up to 0.1, preferably up to 0.05 or up to 0.01 or 0.005
Ti up to 0.1, preferably up to 0.05 or up to 0.01 or 0.005
Co up to 0.1, preferably up to 0.05 or up to 0.01 or 0.005
N up to 0.05, preferably up to 0.01
O up to 0.1, preferably up to 0.01.

According to one embodiment, the Fe-based powder is free from any additional impurities such as Cr, Nb, W, Hf, Ta, Pb, Sn, P, S and Cu or has a total amount thereof up to 0.5 wt% or up to 0.3 wt% or up to 0.1 wt% or up to 0.05 wt%.

According to one embodiment, the density of the Fe-based powder ranges from about 7 to about 9 g/cm$^3$, preferably from 7.5 to 8.5 g/cm$^3$.

The Fe-based powder has proved to be highly promising for a plurality of additive manufacturing processes such as Laser-Powder Bed Fusion (L-PBF), Electron Powder Bed Fusion (E-PBF), Direct Energy Deposition (DED) and Binder Jetting, particularly L-PBF. The additively manufactured object shows negligible dimensional changes after the printing process and after subsequent solution annealing and cooling.

Moreover, the Fe-based powder of the invention has also been found to be suitable for consolidation processes such as HIP (Hot Isostatic Pressing), spark plasma sintering, pressing (such as uniaxial or multiaxial pressing), and metal injection moulding, the latter two needing a subsequent sintering stage. Such consolidation processes as well as additive manufacturing processes have proved to show reduced porosity (higher density) compared to powder comprising aluminum and/or titanium in amounts deteriorating these properties.

Ni promotes formation of Fe-Ni martensite during cooling. At sufficiently high cooling rates, 5 to 10 wt% nickel is sufficient to achieve Fe-Ni martensite. By increasing the nickel content, the cooling rate necessary to form martensite reduces significantly. At about 10 wt% Ni, a fully martensitic matrix is formed even with slow cooling. A content of more than 25 wt% nickel lowers the martensite formation temperature below room temperature and thus promotes the formation of austenite which undesirably changes the morphology of martensite.

If Ni is below the claimed range, then the critical cooling rate to achieve martensite increases and the solubility of other elements in the matrix increases, leading to lower precipitation kinetics upon ageing. The claimed range of Ni also ensures adequate toughness. If Ni is above the claimed range, then the martensite start temperature will be lowered such that the martensitic steel will comprise an undesirable amount of retained (residual) austenite.

Mo forms intermetallic compounds with both Ni and Fe. The intermetallic compounds of Ni and Mo formed during the aging process promote the hardness and/or strength of the Fe-based powder. Molybdenum also decreases the diffusion coefficients of certain alloying elements at the grain boundaries and thus slows down the grain boundary precipitation of second-phase particles during aging. This improves ductility and plasticity of the manufactured object. However, Mo also tends to segregate during fast solidification, which at high Mo amounts, promotes the formation of retained austenite at the micro-segregated regions. This, in combination with the Ni range, occurs if the Mo content is above 9.0 wt%. If Mo is below 7.0 wt%, then the amount of formed Mo-Ni precipitates results in insufficient hardness, yield strength, and ultimate tensile strength.

Preferably, the total content of Ni + Mo is below 23 wt% to achieve a near fully martensitic matrix of at least 95 volume% of martensite, the possible remaining portion being retained austenite, if present.

According to one embodiment, the microstructure of Fe-based powder at room temperature (20 °C) is martensite (i.e. lath martensite).

C increases the hardness of the Fe-based powder. C is kept within the claimed range to prevent eutectic carbide formation and stabilize possible retained austenite. If C is below the claimed range, fine Mo rich carbides to strengthen the matrix cannot form. If C is above the claimed range, the printing properties of the Fe-based powder will deteriorate and the martensite start temperature drops. Also, a C content above the claimed range results in increased residual stress.

Mn may be added during the powder atomization processing in order to increase the processability. Amounts of Mn above the range specified herein deteriorate the ductility and decrease the tensile strength. Moreover, amounts of Mn above the specified range promotes delta ferrite formation which is undesirable for at least part of the objectives described herein, for example an increased loss of plasticity and ductility of the manufactured object.

Si may be added to increase the processability during the powder atomization stage. If Si is added in amounts above the range specified herein, an increased and very undesirable loss of plasticity and ductility of the object manufactured from the powder occurs.

Ti and Al, if present as impurities, may act as deoxidizers and can be comprised in a total amount of up to 0.1 wt%, preferably up to 0.05 wt% or up to 0.01 wt% or up to 0.005 wt%. Most preferably, the Fe-based powder is free from Ti and/or Al. It has been found Ti and Al, in particular above the amounts specified herein lead to oxide inclusion, and increased porosity and lower ductility after sintering.

N may be present in the powder subsequent to the nitrogen gas atomization stage and/or because of the presence of nitrogen in the atmosphere. The content of N is preferably, if present, not above 0.05 wt% or not above 0.01 wt%.

Each particle may be considered to comprise substantially the same ratio of the comprised elements in the Fe-based powder. The particles of the powder may be considered to have a substantially spherical shape. The particle diameter of a particle is thus assumed to be substantially uniform.

According to one embodiment, at least 90 vol% of the particles of the Fe-based powder have a diameter lower than 500 $\mu$m, preferably lower than 200 $\mu$m, and most preferably lower than 45 $\mu$m such as lower than 38 $\mu$m or lower than 32 $\mu$m, and preferably at most 10 vol% of the particles of the Fe-based powder have a diameter lower than 10 $\mu$m or lower than 2 $\mu$m. This embodiment is suitable for binder jetting techniques.

According to one embodiment, at most 10 vol% of the particles of the powder have a diameter lower than 15 $\mu$m and at least 90 vol% of the particles of the powder have a diameter lower than 53 $\mu$m or lower than 45 $\mu$m. This embodiment is particularly suitable for L-PBF techniques. According to one embodiment, at most 10 vol% of the particles of the powder have a diameter lower than 20 $\mu$m and 90 vol% of the particles of the powder have a diameter lower than 53 $\mu$m. This embodiment is particularly suitable for L-PBF techniques.

According to one embodiment, at most 10 vol% of the particles of the powder have a diameter lower than 45 $\mu$m and at least 90 vol% of the particles of the powder have a diameter lower than 106 $\mu$m. This embodiment is particularly suitable for E-PBF techniques.

According to one embodiment, at most 10 vol% of the particles of the powder have a diameter lower than 53 $\mu$m or lower than 45 $\mu$m and at least 90 vol% of the particles of the powder have a diameter lower than 150 $\mu$m or lower than 90 $\mu$m. This embodiment is particularly suitable for Direct Energy Deposition techniques.

According to one embodiment, the particles of the powder have a mean particle diameter ranging from 10 to 60 $\mu$m, preferably from 25 to 50 $\mu$m. This range is particularly suitable for L-PBF techniques.

The diameter of the particles of the Fe-based powder is determined by laser diffraction according to ASTM B822.

The invention also relates to a method of producing a Fe-based powder as disclosed herein comprising the steps of

> i) providing a steel melt having a composition of elements resulting in a Fe-based powder as disclosed herein
> ii) providing the Fe-based powder by atomizing the steel melt,
> iii) optionally extracting, from the atomized powder, a Fe-based powder fraction wherein preferably at least 90 vol% of the particles of the powder have a diameter lower than 500 $\mu$m and at most 10 vol% of the particles of the powder have a diameter lower than 2 $\mu$m.

According to one embodiment, the steel melt is transformed into a Fe-based powder using an atomization technique such as a gas atomization technique wherein a stream of a steel melt flowing through a nozzle is disintegrated into droplets by impingement of the steel melt with a high-pressure inert gas stream, such as nitrogen or argon, wherein the particles thus created are collected in a protective atmosphere. The pressure of the gas stream is preferably above 30 bar. Depending on the exact desired properties of the powder, a higher or lower pressure can be used. The droplets are subsequently cooled in a conventional atomization tower to form solid particles. The cooling rate will affect the properties of the powder but typically rates of between $10^2$ to $10^7$ K/s may be used. Particles in the desired fraction are subsequently preferably extracted using sieving operations comprising conventional steps of passing the powder through a mesh and/or suitable air classification equipment, such as an ATP Turboflex Air Classifier from Hosokawa Micron Ltd. Use of alternative air classification or powder separation equipment is also possible.

The particles of the powder may be sieved and blended during one or more gas atomization processes.

The invention also relates to the use of a Fe-based powder as described herein for producing an object by

    i) additive manufacturing; or
    ii) a consolidation process.

According to one embodiment, the consolidation process is Hot Isostatic Pressing (HIP), spark plasma sintering, pressing or metal injection moulding.

According to one embodiment, the Fe-based powder is used to produce or repair an object such as tool holders, injection moulding tools and dies, extrusion dies, hot stamping dies, and forging dies.

According to one embodiment, the additive manufacturing may be performed by binder jetting, directed energy deposition or powder bed fusion, such as laser beam powder bed fusion or electron beam powder bed fusion, preferably powder bed fusion, more preferably laser beam powder bed fusion. The invention also relates to the use of a Fe-based powder as described herein for consolidation processes such as HIP (hot isostatic pressing), spark plasma sintering, pressing, e.g. uniaxial or multiaxial pressing, and metal injection moulding, for example for manufacturing or repair of objects such as tool holders, injection moulding tools and dies, extrusion dies, hot stamping dies, and forging dies.

The invention also relates to a process for producing an object comprising additively building an object by iteratively performing steps i) and ii)

    i) melting particles of the Fe-based powder as described herein
    ii) solidifying the melt,
    and then subsequently
    iii) aging the built object

This process is preferably performed by means of L-PBF.

The invention also relates to a process for producing an object comprising additively building an object by iteratively performing steps i) and ii)

    i) depositing a Fe-based powder as described herein
    ii) applying a binder to form a bound Fe-based powder
    and then subsequently
    iii) curing and debinding the built object
    iv) sintering the built body; and
    v) aging the built object.

In the process of the preceding paragraph, the additive manufacturing may be binder jetting.

Aging is sometimes referred to as precipitation hardening, age hardening and particle hardening, which is a heat treatment technique used to increase the yield strength of the object. Aging produces fine particles of a second phase (precipitates) in the treated object because of temperature-dependent solid solubility as well as activity of the elements and thermodynamic driving forces for the second phase nucleation, and stability.

According to one embodiment, aging of the built object is conducted without any preceding heat treatment, such as homogenization or solution annealing. A similar hardness level may still be obtained.

According to one embodiment, a preceding heat treatment, such as homogenization and/or solution annealing, is performed prior to aging of the built object.

Homogenization is a heat treatment process generally conducted at, e.g. 950-1200 °C and commonly used during metal manufacturing. Homogenization is conducted to remove micro-segregation and dissolve precipitates. According to one embodiment, solution annealing is performed at 800-1100 °C. Solution annealing is a heat treatment process commonly conducted at a temperature higher than the ferrite to austenite transformation temperature. Solution annealing is commonly conducted to remove chemical inhomogeneities in heavy alloy steel by inducing diffusion of alloying materials and adjusting the grain size.

The building process thus results in an as-built object having a substantially martensitic microstructure, preferably with a content of retained austenite below 5 vol% or below 1 vol%. The martensitic microstructure may thus, depending on process conditions, contain small amounts of retained austenite, i.e. substantially without unwanted precipitates.

The aging process triggers the precipitation of intermetallic phases of NisMo, and possibly $\mu$ phase and laves phases as well as Mo rich carbides when Mo and C are present in the powder. This advantageously increases the strength of the object produced by additive manufacturing.

According to one embodiment, the aging is performed at a temperature in the range of 400-600 °C, for example 460-600 °C, preferably for a period of 0.5 to 8 hours such as 3 to 5 hours. Aging above this temperature range may lead to a reduced hardness of the aged material because of austenite reversion and/or precipitation coarsening.

Example

A metal melt was provided in an open furnace by induction melting. The melt was subsequently exposed to inert gas atomization in a nitrogen environment to provide a Fe-based powder. The elements were mixed in amounts so as to yield an elemental composition as set out in table 1.

Table 1 - Elemental composition of Fe-based powder, wt%

| C | 0.04 |
|---|---|
| N | 0.0 |
| O | 0.1 |
| Al | <0.01 |
| Si | 0.1 |
| P | 0.01 |
| S | 0.01 |
| Ti | <0.01 |
| Cr | - |
| Mn | 0.1 |
| Fe | Balance |
| Co | 0.0 |
| Ni | 14.0 |
| Mo | 7.6 |

The particles of the powder were sieved after atomization to obtain a particle size distribution, where 10 vol% of the particles of the powder had a diameter lower than 20 $\mu$m and 90 vol% of the particles of the powder had a diameter lower than 53 $\mu$m.

Cylindrical samples were additively manufactured from the Fe-based powder using an EOS M290 L-PBF machine equipped with 400W Yb-fiber laser. For the process optimization the widely used volumetric laser energy density (E) was considered (Eq.1).

$$E = \frac{P}{v \times h \times t}$$ 
Eq. (1)

where P is laser power (W), v is the scanning speed (mm/s), h is the hatch spacing (mm), and t is the layer thickness (mm). The build plate was heated to 40°C and the building was conducted in nitrogen atmosphere ($\leq$1.6 vol.% Oxygen). The laser beam size was approximately 80 $\mu$m. Samples were produced using 40 $\mu$m layer thickness, ~1000 mm/s scanning speed, ~0.1 mm hatching spacing, and ~ 260-290 W laser power. A laser energy density of ~65-80 J/mm$^3$ resulted in a near fully dense material.

The manufactured samples are referred to as as-built samples.

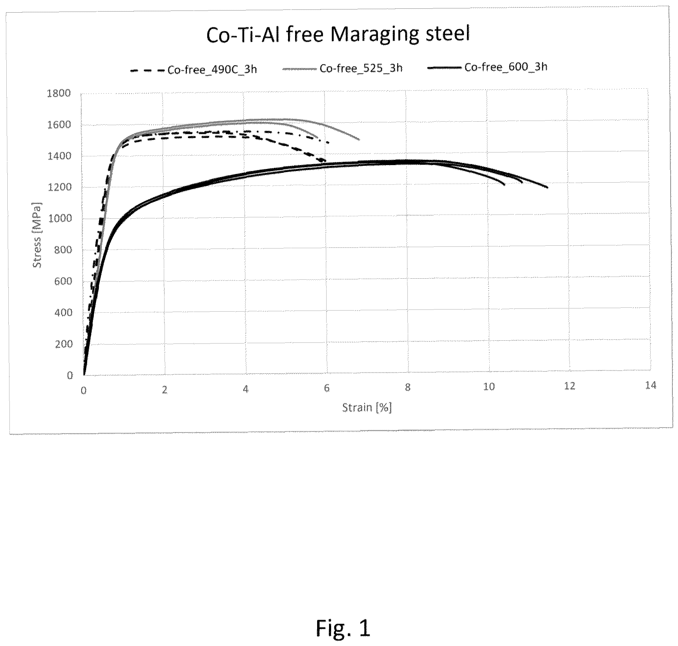

The cylindrical as-built samples were then solution annealed at 1100°C for 2 h and cooled down to room temperature and subsequently aged at different temperatures and holding times as set out in table 2. The samples were then machined to produce small-sized 4C20 tensile test samples proportional to standard specimen. Tensile tests were performed conforming to the ASTM E8M standard. One as-built sample was aged in a chamber furnace at 490°C for 8 hours. A small-sized 4C20 tensile test sample proportional to the standard specimen was machined from the aged sample. Figure 1 shows tensile curves at 3 different ageing conditions. From figure 1 and table 2 it can be noted among other characteristics that a yield strength (YS) of ~1500 MPa; an ultimate tensile stress (UTS) of 1600 MPa; a Z (reduction in area) about 11 %; and a tensile elongation of ~6 % after aging at 525 °C for 3 h could be obtained.

Table 2

|  | 490 °C/3h | 525 °C/3h | 600 °C/3h |
|---|---|---|---|
| YS (MPa) | 1434.7 | 1475.7 | 880.3 |
| UTS (MPa) | 1533.7 | 1588.3 | 1342.0 |
| ε (%) | 6.4 | 6.4 | 10.9 |
| Z (%) | 17.5 | 11.2 | 21.5 |

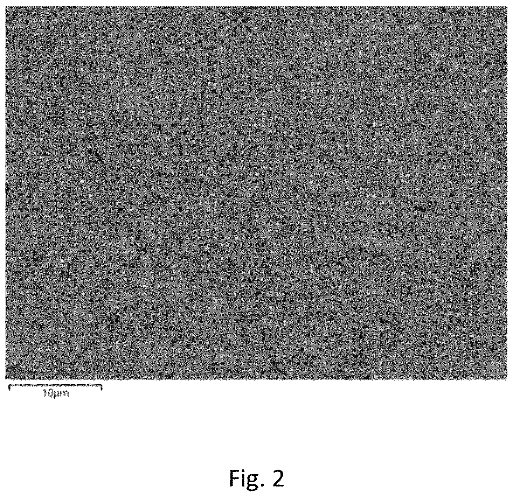

Table 3 below shows the aged hardness of the as built samples at different ageing temperatures and soaking times, for example a hardness of up to 525 HV5 after printing and solution annealing at 1100°C during 2h and ageing at 525°C for 180 minutes. Electron backscatter diffraction phase analysis (EBSD) in figure 2 further shows less than 1 vol% austenite (FCC structure) remained within the BCC(BCT) martensitic matrix. The austenite corresponds to the whitish fractions in the otherwise dark region in figure 2 (representing the martensitic matrix).

Table 3 - Hardness [HV5] as built

| As built hardness (~380) solution annealed hardness (~350) | | | | |
|---|---|---|---|---|
| Solution annealed and aged at 460°C | | | | |
| 60 min | 120 min | 180 min | 360 min | 600 min |
| 414 ± 6 | 417 ± 12 | 440 ± 10 | 462 ± 8 | 470 ± 17 |
| Solution annealed and aged at 490°C | | | | |
| 60 min | 120 min | 180 min | 360 min | 600 min |
| 421 ± 7 | 455 ± 7 | 465 ± 9 | 500 ± 10 | 525 ± 9 |
| Solution annealed and aged at 525°C | | | | |
| 30 min | 60 min | 180 min | 360 min | - |
| 418 ± 14 | 485 ± 6 | 524 ± 10 | 515 ± 12 | - |
| Solution annealed and aged at 600°C | | | | |
| 30 min | 60 min | 180 min | 360 min | - |
| 487 ± 9 | 472 ± 8 | 438 ± 5 | 425 ± 4 | - |

**Claims**

1.  Fe-based powder for additive manufacturing comprising the following elements in wt% based on the weight of all elements of the powder:

    i) Ni in an amount ranging from 9.0 to 14.0
    ii) Mo in an amount ranging from 7.0 to 9.0
    iii) C in an amount ranging from 0.03 to 0.08
    iv) Si in an amount up to 0.3
    v) Mn in an amount up to 0.3

    the balance being Fe and usual impurities.

2.  Fe-based powder according to claim 1, wherein Al is comprised in an amount up to 0.1, preferably up to 0.005.

3.  Fe-based powder according to claim 1 or 2, wherein Ti is comprised in an amount up to 0.1, preferably up to 0.005.

4.  Fe-based powder according to any one of claims 1 to 3, wherein Ni is comprised in an amount ranging from 10.0 to 14.0.

5. Fe-based powder according to any one of claims 1 to 4, wherein Mo is comprised in an amount ranging from 7.5 to 8.5.

6. Fe-based powder according to any one of claims 1 to 5, wherein C is comprised in an amount ranging from 0.035 to 0.07.

7. Fe-based powder according to any one of claims 1 to 6, wherein C is comprised in an amount ranging from 0.04 to 0.07.

8. Fe-based powder according to any one of claims 1 to 7, wherein at least 90 vol% of the particles of the powder have a diameter lower than 500 $\mu$m and at most 10 vol% of the particles of the powder have a diameter lower than 2 $\mu$m.

9. Fe-based powder according to any one of claims 1 to 7, wherein at least 90 vol% of the particles of the powder have a diameter lower than 32 $\mu$m and at most 10 vol% of the particles of the powder have a diameter lower than 10 $\mu$m.

10. Fe-based powder according to any one of claims 1 to 7, wherein at least 90 vol% of the particles of the powder have a diameter lower than 106 $\mu$m and at most 10 vol% of the particles of the powder have a diameter lower than 45 $\mu$m.

11. Use of a Fe-based powder according to any one of claims 1 to 10 for producing an object by

    i) additive manufacturing; or
    ii) a consolidation process.

12. Use according to claim 11, wherein the consolidation process is Hot Isostatic Pressing (HIP), spark plasma sintering, pressing, or metal injection moulding.

13. Process for producing an object comprising additively building an object by iteratively performing steps i) and ii)

    i) melting particles of the Fe-based powder according to any one of claims 1 to 10
    ii) solidifying the melt
    and then subsequently
    iii) aging the built object.

14. Process for producing an object comprising additively building an object by iteratively performing steps i) and ii)

    i) depositing a Fe-based powder according to any one of claims 1 to 10
    ii) applying a binder to form a bound Fe-based powder and then subsequently
    iii) curing and debinding the built object
    iv) sintering the built object; and
    v) aging the built object.

Fig. 1

Fig. 2

## EUROPEAN SEARCH REPORT

**Application Number**

EP 23 16 8701

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 392 065 A (BIEBER CLARENCE G ET AL) 9 July 1968 (1968-07-09) * column 1, lines 22-51 * * column 2, line 33 – column 4, line 62 * * column 4, line 63 – column 5, line 34 * * tables 1,2 * | 1-14 | INV. B22F1/052 B22F10/14 B22F10/28 B33Y10/00 B33Y70/00 C22C38/02 |
| A | EP 3 800 276 A1 (BOEING CO [US]) 7 April 2021 (2021-04-07) * paragraphs [0001], [0017], [0025], [0037], [0040], [0050], [0051], [0125] * * figure 12 * | 1-14 | C22C38/04 C22C38/08 C22C38/12 B22F3/105 B22F3/15 B22F3/22 C22C33/02 |
| A | EP 3 730 236 A1 (HITACHI METALS LTD [JP]) 28 October 2020 (2020-10-28) * paragraphs [0001], [0002], [0006] – [0009], [0017] – [0027], [0033] – [0037] * * tables 1,2 * | 1-14 | |
| A | DE 10 2017 131218 A1 (VOESTALPINE BOEHLER EDELSTAHL GMBH & CO KG [AT]) 27 June 2019 (2019-06-27) * paragraphs [0012] – [0014], [0030] – [0049] * * figures 1-11 * * claims 1-11 * | 1-14 | **TECHNICAL FIELDS SEARCHED (IPC)** B22F C22C B33Y |
| A | YI HE ET AL: "Age hardening and mechanical properties of a 2400 MPa grade cobalt-free maraging steel", METALLURGICAL AND MATERIALS TRANSACTIONS A, SPRINGER-VERLAG, NEW YORK, vol. 37, no. 4, April 2006 (2006-04), pages 1107-1116, XP019695435, ISSN: 1543-1940 * the whole document * | 1-14 | |

-/--

The present search report has been drawn up for all claims

| Place of search | Date of completion of the search | Examiner |
|---|---|---|
| The Hague | 19 September 2023 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 935 007 A1 (IMPHY SA [FR]) 11 August 1999 (1999-08-11) * the whole document * ----- | 1-14 | |
| A | EP 0 931 844 A1 (IMPHY SA [FR]) 28 July 1999 (1999-07-28) * the whole document * ----- | 1-14 | |

TECHNICAL FIELDS SEARCHED (IPC)

The present search report has been drawn up for all claims

| Place of search | Date of completion of the search | Examiner |
|---|---|---|
| The Hague | 19 September 2023 | Stocker, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8701

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | | | Publication date | Patent family member(s) | | | Publication date |
|---|---|---|---|---|---|---|---|
| US 3392065 | A | | 09-07-1968 | AT | 267568 | B | 10-01-1969 |
| | | | | BE | 688242 | A | 14-04-1967 |
| | | | | DE | 1533298 | A1 | 05-03-1970 |
| | | | | ES | 332159 | A1 | 01-11-1967 |
| | | | | FR | 1500486 | A | 03-11-1967 |
| | | | | GB | 1089690 | A | 01-11-1967 |
| | | | | NL | 6614537 | A | 17-04-1967 |
| | | | | SE | 337935 | B | 23-08-1971 |
| | | | | US | 3392065 | A | 09-07-1968 |
| EP 3800276 | A1 | | 07-04-2021 | AU | 2020203512 | A1 | 15-04-2021 |
| | | | | CN | 112593162 | A | 02-04-2021 |
| | | | | EP | 3800276 | A1 | 07-04-2021 |
| | | | | JP | 2021055179 | A | 08-04-2021 |
| | | | | US | 2021095361 | A1 | 01-04-2021 |
| EP 3730236 | A1 | | 28-10-2020 | CN | 111448020 | A | 24-07-2020 |
| | | | | EP | 3730236 | A1 | 28-10-2020 |
| | | | | JP | 6610984 | B2 | 27-11-2019 |
| | | | | JP | 2020045567 | A | 26-03-2020 |
| | | | | JP | WO2019124296 | A1 | 19-12-2019 |
| | | | | SG | 11202005032T | A | 29-06-2020 |
| | | | | US | 2020399747 | A1 | 24-12-2020 |
| | | | | WO | 2019124296 | A1 | 27-06-2019 |
| DE 102017131218 | A1 | | 27-06-2019 | CN | 111670262 | A | 15-09-2020 |
| | | | | DE | 102017131218 | A1 | 27-06-2019 |
| | | | | EP | 3728675 | A1 | 28-10-2020 |
| | | | | JP | 7123143 | B2 | 22-08-2022 |
| | | | | JP | 2021512999 | A | 20-05-2021 |
| | | | | US | 2023220527 | A1 | 13-07-2023 |
| | | | | WO | 2019121879 | A1 | 27-06-2019 |
| EP 0935007 | A1 | | 11-08-1999 | DE | 69903201 | T2 | 18-06-2003 |
| | | | | EP | 0935007 | A1 | 11-08-1999 |
| | | | | ES | 2185295 | T3 | 16-04-2003 |
| | | | | FR | 2774396 | A1 | 06-08-1999 |
| | | | | JP | H11264054 | A | 28-09-1999 |
| | | | | US | 6136102 | A | 24-10-2000 |
| EP 0931844 | A1 | | 28-07-1999 | DE | 69805495 | T2 | 28-11-2002 |
| | | | | EP | 0931844 | A1 | 28-07-1999 |
| | | | | ES | 2176934 | T3 | 01-12-2002 |
| | | | | FR | 2774099 | A1 | 30-07-1999 |
| | | | | JP | H11256278 | A | 21-09-1999 |
| | | | | US | 6080359 | A | 27-06-2000 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 16 8701

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2023

| Patent document cited in search report | Publication date | Patent family member(s) | Publication date |
|---|---|---|---|
| ------------------------------------------------------------------------------ | | | |

For more details about this annex : see Official Journal of the European Patent Office, No. 12/82

EPO FORM P0459

page 2 of 2